# EUROPEAN PATENT SPECIFICATION

(11) **EP 1 094 942 B1**
(45) Date of publication and mention of the grant of the patent: **25.09.2002**
(21) Application number: 99926611.7
(22) Date of filing: 15.06.1999
(51) Int. Cl.: B32B 27/06, B42D 15/00, B42D 15/10

(54) **IMPROVEMENTS IN SECURITY DOCUMENTS AND SUBSTRATES THEREFOR**
SICHERHEITSDOKUMENTE UND SUBSTRATE DAFÜR
AMELIORATION DE DOCUMENTS DE SECURITE ET SUBSTRATS AFFERENTS

(30) Priority: 25.06.1998 GB 9813779
(43) Date of publication of application: 02.05.2001
(73) Proprietor: De La Rue International Limited, Basingstoke, Hampshire RG22 4BS (GB)
(72) Inventor: AMES, Christopher John, Reading, Berkshire RG6 5PY (GB); THOMAS, David William, Pamber Heath, Tadley, Hampshire RG26 3EL (GB)
(74) Representative: Bucks, Teresa Anne
(86) International application number: GB9901895
(87) International publication number: WO99067092

(56) References cited:
- EP-A- 0 374 763
- WO-A-83/00659
- WO-A-97/01438
- FR-A- 2 279 548
- US-A- 5 618 630
- US-A- 5 815 292

## Description

The invention relates to improved security documents such as banknotes, cheques and passports which are required to provide a high degree of security against imitation and a substrate for producing such security documents.

Such documents are traditionally made from security paper, that is paper having good durability and a high resistance to crumpling and tearing.

However, such documents are still prone to damage through water, cutting and eventual wear. Furthermore such security documents are vulnerable to forgery.

To prevent counterfeiting it is widely known to use in traditional banknotes and security documents, security devices such as security threads or strips which are made from a transparent polyester film provided with a wholly or partially reflective metallised layer. The threads are wholly or partially embedded within the paper and provide a high degree of security against counterfeiting. However, the paper itself is still subject to a degree of wear and damage.

This problem has been addressed in International Patent Application WO83/00659 which describes a plastic banknote. This banknote is made up from one or more films of transparent biaxially oriented polymers which are coated with layers of relatively opaque printing ink and heat activated adhesive material. An optically variable security device such as a diffraction grating is adhered to the substrate in a window left in the opaque layer. The substrate is then printed with identifying indicia and covered on both sides by further layers of polymer material. Most counterfeiters do not have access to equipment for making such materials and plastic banknotes are damage and wear resistant. It should be noted that whilst biaxially oriented polymer films such as those described in WO83/00659 have excellent resistance to tear initiation (i.e. edge tear resistance) they have poor resistance to tear propagation (i.e. internal tear resistance) when compared to paper.

It is an object of the present invention to provide improved security documents and substrates therefor made from a polymeric material to address the problems of counterfeitability.

It is a further object of the present invention to provide a security feature in the form of a hidden message which becomes visible under appropriate viewing conditions.

According to the invention there is therefore provided a substrate (11) for security documents comprising a first layer (16) of biaxially oriented polymeric film laminated together with a second layer (15) of biaxially oriented polymeric film with a metallic layer (18) between, and a third layer (14) of biaxially oriented polymeric film laminated to the second layer with a partially metallised metallic layer (19/20) therebetween, the metal in each metallic layer being the same or visually similar.

Preferably there are a plurality of partially metallised metallic layers (19/20), each of which is located between a pair of polymeric layers (14,15,16).

At least one metallic layer (18) may provide an electrically conductive path along the width or length of the substrate (11).

A magnetic material may be provided between two metallic layers (18/19/20).

A layer of polarising material is preferably provided on one or both external surfaces of the substrate (11).

Preferably the substrate (11) further comprises a dichroic coating on one or both external surfaces of the substrate (11).

Preferably the thicknesses of at least two of the polymeric layers (14, 15, 16) are different.

The metallic layers (18, 19) may only be present in a limited region of the substrate.

The invention also provides a security document produced from the substrate (11).

A security document may incorporate a limited region produced from the substrate (11).

The invention also provides a security element produced from the substrate (11).

A security document preferably incorporates such a security element, which element is exposed at intervals in windows.

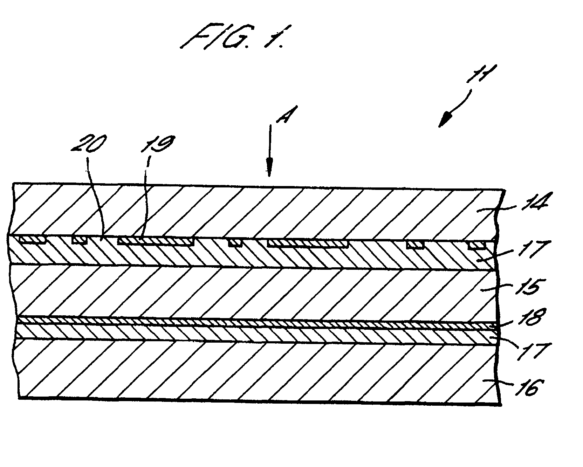

The invention will now be illustrated by the following examples with reference to the accompanying drawing, in which Fig. 1 is a longitudinal cross-sectional side elevation of a substrate for a security document according to the present invention.

The substrate comprises a laminate of at least three biaxially oriented polymeric layers laminated together with partial or whole layers of metal sandwiched between the polymeric layers.

### Example 1

As shown in Fig. 1, the substrate (11) comprises three polymeric layers (14, 15, 16), laminated together with layers of adhesive (17). Layers (14) and (15) are transparent films which have been metallised. Layer (15) has a whole layer of metal (18), whilst the metal layer on layer (14) has been selectively metallised or demetallised to have regions of opaque metal (19) and clear regions (20) forming embedded indicia. The embedded indicia may be of a positive nature, i.e. the indicia are formed by the metallic regions (19), or negative in which the indicia are formed by the clear regions (20). The indicia may be in the form of an image, alphanumeric text, a pattern, or any other appropriate form.

The metal of the metallised films (14, 15) is preferably a vacuum deposited aluminium film, although another metal such as cobalt or sputtered nickel/iron may be used. The metallised film (14, 15) may be an SHM (™) film from Hoechst Trespaphan which is available in various thicknesses. The layer (14) can then be selectively demetallised by a known process. Alternatively the layer (14) can be a transparent film, which is not metallised, such as GND (™) film also from Hoechst Trespaphan which is also available in various thicknesses. This can then be selectively metallised by a known process. Layer (16) is also a transparent film which is not metallised.

It should be noted that all references in this specification to a partially metallised layer should include a layer which has been created by a selective demetallisation process.

The layers (14, 15, 16) are laminated together, preferably with layers (17) of cross-linking or thermally activated adhesive with the metallic layers (18, 19/20) located between the transparent layers (14, 15, 16) so that they are wholly encapsulated within the substrate (11). As an alternative to lamination using an adhesive, the polymeric films selected may be coextruded multilayer thermoplastic films, of the type used in heat sealable packaging films, which may be laminated together when thermally activated.

The metals used in the different layers must be the same or visually similar so that in ordinary light there is no visual distinction between the partially demetallised layer (19/20) and the fully metallised layer (15/18), and a single metallic colour is seen. Thus the indicia are, under such conditions, hidden.

However, the polymeric films described above exhibit interesting birefringence characteristics, with birefringence colours being dependent on the refractive index, orientation, degree of orientation and thickness of the film. When viewed between a pair of polarising filters, either crossed or parallel, some such biaxially orientated polymeric films will provide birefringent colours. Where such a film is placed over a reflective metallic layer, the oriented film provides birefringent colours when viewed through only one polarising filter. Thus in the present invention, when the substrate (11) is viewed with a single suitable polarising filter such birefringent characteristics are exhibited which reveals the hitherto hidden indicia, which provides a useful security measure. The birefringent colours change according to the thickness of the film, so can be varied by laminating different numbers and/or thicknesses of polymeric layers together. Thus if, in the example illustrated in Figure 1, the polymeric layers (14, 15, 16) have respective thicknesses of 20 microns each, a different birefringent colour will be seen, when the substrate (11) is viewed from the direction of arrow A through a polarising filter, in the metal regions (19) covered by one polymeric layer (14) from that seen in the demetallised regions (20), through which the full metal layer (18) can be seen covered by two polymeric layers. In other words, the hidden indicia are revealed in the form of different colours.

Furthermore, when the angle of view is varied, a colour shift is observed due to the change in light path length through the film. This colour shift has the advantage that the observed colours in the direction of the major orientation are different to those in the perpendicular direction. For example a structure having 40 microns of biaxially oriented polypropylene over a metallised layer exhibits a purple colour when overlaid with a polarising filter and viewed close to normal. At increasing angles of view (i.e. angle measured from normal) the colour changes through blue/green to a greyish colour when the observer moves in the long direction and from purple through yellow/green to blue, when the observer moves in the cross direction. This colour shift is especially effective when both of the two colours of the metallised regions (19) and the metal layer (18) exhibit different colour shifts.

For the demetallisation process, any suitable methods may be used, such as direct etching or indirect etching using a resist.

Alternatively a selective metallisation process may be used or the metal regions (18), (19) may be created by printing with a high reflectivity metallic ink.

Another alternative to making the substrate (11) would be to laminate transparent polymeric layers (14, 15, 16) with one fully and one pre-imaged metal foil layer therebetween. A further alternative would be to image the metallic layer by laser cutting or ablation of the metal either as an intermediate step in the construction of the substrate, or subsequent to its assembly. This would be particularly useful for metal other than aluminium, e.g. stainless steel.

### Example 2

In this example a number of different partially metallised polymeric layers could be laminated together with the fully metallised layer, all the partially metallised layers bearing different metallic patterns of the same metal so as to create a multiple colour effect when viewed through the polarising filter, or with partially metallised layers on both faces of the continuous metal layer.

In all of the aforementioned examples, where there is a continuous metal path either along the length or width of the substrate, this provides an electrically conductive path which can be used for authentication using appropriate machine readers.

In some applications, it may be advantageous for the metallic layer or layers to be partially or wholly obscured as in the following example 3 to 6.

### Example 3

Any of the aforementioned examples may be modified by overprinting with a translucent coloured ink to give a coloured metallic effect. The translucent coloured ink may be applied directly to one or more of the metal layer or layers (18, 19) before the polymeric layers (14, 15) are laminated together.

### Example 4

In this example, an opaque coating is applied to one or both of the external surfaces of the substrate (11) leaving one or more areas uncoated which form windows in which the birefringence colour effect of the metallised layers or regions (18, 19) can be viewed through the filter.

### Example 5

The birefringent colours described in the previous examples can be made permanently visible by laminating to one or both sides of the substrate (11) a layer of an appropriate polarising material or using dichroic materials as external coatings for the substrates.

### Example 6

In this example the metallised layers (18, 19) with or without additional metallic layers as suggested in Example 2, are only present in a limited region of the substrate (11). This may be a discrete element or a limited area running along the width or length of the note, as required. The rest of the substrate would be clear and comprised of just the layers of biaxially oriented polymeric films (14, 15) and/or others.

The substrate described above can be used to make all forms of security documents such as banknotes, cheques, and passports.

The substrate described herein may also be slit to form security elements for partially embedding into security papers so that they are revealed at intervals in windows.

## Claims

1. A substrate (11) for security documents comprising a first layer (16) of biaxially oriented polymeric film laminated together with a second layer (15) of biaxially oriented polymeric film with a metallic layer (18) between, and a third layer (14) of biaxially oriented polymeric film laminated to the second layer with a partially metallised metallic layer (19/20) therebetween, the metal in each metallic layer being the same or visually similar.

2. A substrate (11) as claimed in claim 1, further comprising a plurality of partially metallised metallic layers (19/20), each of which is located between a pair of polymeric layers (14,15,16).

3. A substrate (11) as claimed in claim 1, in which at least one metallic layer (18) provides an electrically conductive path along the width or length of the substrate (11).

4. A substrate (11) as claimed in any one of the preceding claims further comprising a magnetic material between two metallic layers (18/19/20).

5. A substrate (11) as claimed in any one of the preceding claims further comprising a layer of polarising material on one or both external surfaces of the substrate (11).

6. A substrate (11) as claimed in any one of the preceding claims further comprising a dichroic coating on one or both external surfaces of the substrate (11).

7. A substrate (11) as claimed in any one of the preceding claims in which the thicknesses of at least two of the polymeric layers (14,15,16) are different.

8. A substrate (11) as claimed in any one of the preceding claims wherein the metallic layers (18,19) are only present in a limited region of the substrate.

9. A security document produced from the substrate (11) as claimed in any one of the preceding claims.

10. A security document incorporating a limited region produced from a substrate (11) as claimed in any one of claims 1 to 8.

11. A security element produced from the substrate (11) as claimed in any one of claims 1 to 8.

12. A security document incorporating a security element as claimed in claim 11, which element is exposed at intervals in windows.

13. A security document as claimed in any one of claims 9, 10 or 12 in which the security document is a banknote.

## Patentansprüche

1. Substrat (11) für Sicherheitsdokumente, enthaltend eine erste Schicht (16) aus biaxial orientiertem polymerem Film, die mit einer zweiten Schicht (15) von biaxial orientiertem polymerem Film mit einer dazwischenliegenden metallischen Schicht (18) laminiert ist, und eine dritte Schicht (14) aus biaxial orientiertem polymerem Film, die mit der zweiten Schicht mit einer dazwischenliegenden, teilweise metallisierten metallischen Schicht (19/20) laminiert ist, wobei das Metall in jeder metallischen Schicht gleich oder visuell ähnlich ist.

2. Substrat (11) nach Anspruch 1, weiterhin enthaltend eine Vielzahl von teilweise metallisierten metallischen Schichten (19/20), von denen jede zwischen einem Paar von polymeren Schichten (14, 15, 16) angeordnet ist.

3. Substrat (11), nach Anspruch 1, worin mindestens eine metallische Schicht (18) eine elektrisch leitende Bahn entlang der Breite und der Länge des Substrats (11) bereitstellt.

4. Substrat (11), nach einem der vorhergehenden Ansprüche, weiterhin enthaltend ein magnetisches Material zwischen zwei metallischen Schichten (18/19/20).

5. Substrat (11) nach einem der vorhergehenden Ansprüche, weiterhin enthaltend eine Schicht aus polarisierendem Material auf einer oder beiden äußeren Oberflächen des Substrats (11).

6. Substrat (11) nach einem der vorhergehenden Ansprüche, weiterhin enthaltend einen dichroitischen Überzug auf einer oder beiden äußeren Oberflächen des Substrats (11).

7. Substrat (11) nach einem der vorhergehenden Ansprüche, worin die Dicken mindestens zwei der polymeren Schichten (14, 15, 16) verschieden sind.

8. Substrat (11) nach einem der vorhergehenden Ansprüche, worin die metallischen Schichten (18, 19) nur in einem begrenzten Bereich des Substrats vorhanden sind.

9. Sicherheitsdokument, hergestellt aus dem Substrat (11), wie es in einem der vorhergehenden Ansprüche beansprucht ist.

10. Sicherheitsdokument enthaltend einen begrenzten Bereich, der aus einem Substrat (11), wie es in einem der Ansprüche 1 bis 8 beansprucht ist, hergestellt ist.

11. Sicherheitselement, hergestellt aus dem Substrat (11), wie es in einem der Ansprüche 1 bis 8 beansprucht ist.

12. Sicherheitsdokument enthaltend ein Sicherheitselement, wie es in Anspruch 11 beansprucht ist, wobei dieses Element in Abständen in Fenstern freiliegt.

13. Sicherheitsdokument nach einem der Ansprüche 9, 10 oder 12, wobei das Sicherheitsdokument eine Banknote darstellt.

## Revendications

1. Substrat (11) destiné à des documents sécurisés comprenant une première couche (16) d'un film polymère orienté biaxialement appliqué en même temps qu'une deuxième couche (15) de film polymère orientée biaxialement avec une couche métallique (18) entre elles, et une troisième couche (14) de film polymère biaxialement orienté appliquée sur la deuxième couche, une couche métallique partiellement métallisée (19/20) étant placée entre elles, le métal dans chaque couche métallique étant le même ou d'aspect similaire.

2. Substrat (11) selon la revendication 1, comprenant en outre une pluralité de couches métalliques partiellement métallisées (19/20), dont chacune est située entre deux couches polymères (14, 15, 16).

3. Substrat (11) selon la revendication 1, dans lequel au moins une couche métallique (18) confère un chemin électriquement conducteur le long de la largeur ou de la longueur du substrat (11).

4. Substrat (11) selon l'une quelconque des revendications précédentes, comprenant en outre un matériau magnétique entre deux couches métalliques (18/19/20).

5. Substrat (11) selon l'une quelconque des revendications précédentes, comprenant en outre une couche de matériau polarisant sur une ou les deux surfaces externes du substrat (11).

6. Substrat (11) selon l'une quelconque des revendications précédentes, comprenant en outre un revêtement dichroïque sur une ou les deux surfaces externes du substrat (11).

7. Substrat (11) selon l'une quelconque des revendications précédentes, dans lequel l'épaisseur d'au moins deux des couches polymères (14, 15, 16) est différente.

8. Substrat (11) selon l'une quelconque des revendications précédentes, dans lequel les couches métalliques (18, 19) ne sont présentes que dans une région limitée du substrat.

9. Document sécurisé réalisé à partir du substrat (11) selon l'une quelconque des revendications précédentes.

10. Document sécurisé incorporant une région limitée réalisée à partir d'un substrat (11) selon l'une quelconque des revendications 1 à 8.

11. Élément sécurisé réalisé à partir du substrat (11) selon l'une quelconque des revendications 1 à 8.

12. Document sécurisé incorporant un élément sécurisé selon la revendication 11, lequel élément est exposé par intervalles dans des fenêtres.

13. Document sécurisé selon l'une quelconque des revendications 9, 10 ou 12, dans lequel le document sécurisé est un billet de banque.
